# EUROPEAN PATENT SPECIFICATION

(11) **EP 2 425 146 B1**
(45) Date of publication and mention of the grant of the patent: **02.04.2014**
(21) Application number: 10769301.2
(22) Date of filing: 26.04.2010
(51) Int. Cl.: F16F 3/02, F16F 1/02, H05K 5/03, H04M 1/02

(54) **SPRING AND SPRING ASSEMBLY**
FEDER UND FEDERNANORDNUNG
RESSORT ET ENSEMBLE RESSORT

(30) Priority: 30.04.2009 CN 200920131261 U
(43) Date of publication of application: 07.03.2012
(73) Proprietor: BYD Company Limited, Shenzhen, Guangdong 518118 (CN)
(72) Inventor: LIU, Yulong, Guangdong 518118 (CN); ZHOU, Hu, Guangdong 518118 (CN); SUN, Tongbo, Guangdong 518118 (CN); CHEN, Dajun, Guangdong 518118 (CN)
(74) Representative: Gulde Hengelhaupt Ziebig & Schneider
(86) International application number: PCT/CN2010/072215
(87) International publication number: WO 2010/124612

(56) References cited:
- EP-A1- 1 933 537
- CN-A- 101 316 493
- CN-A- 101 316 493
- CN-A- 101 368 608
- CN-Y- 201 184 384
- DE-A1- 3 414 690
- US-A1- 2009 035 056
- US-B1- 6 392 177

## Description

The invention is related to a spring and a spring assembly, particularly to a spring and spring assembly applied to mobile terminal slide driving module.

### BACKGROUND

With improvements of the standards of living, in recent years, mobile terminals, such as cell phone, individual palmtop computer, enrich human's life and become indispensable to living. In order to bring people convenience and pleasure, the structure designs of mobile terminals are more and more diversified, and the general structure designs of the mobile terminals include straight board type, sliding cover type and double cover type. For the sliding cover type design, the sliding cover of the mobile terminal is generally opened semi-automatically, that is, when the user of mobile terminal pushes the sliding cover by a predetermined distance, the sliding cover is able to automatically slide to its open or close position. Convenient carrying and thinning has become the tendency of designs of mobile terminals.

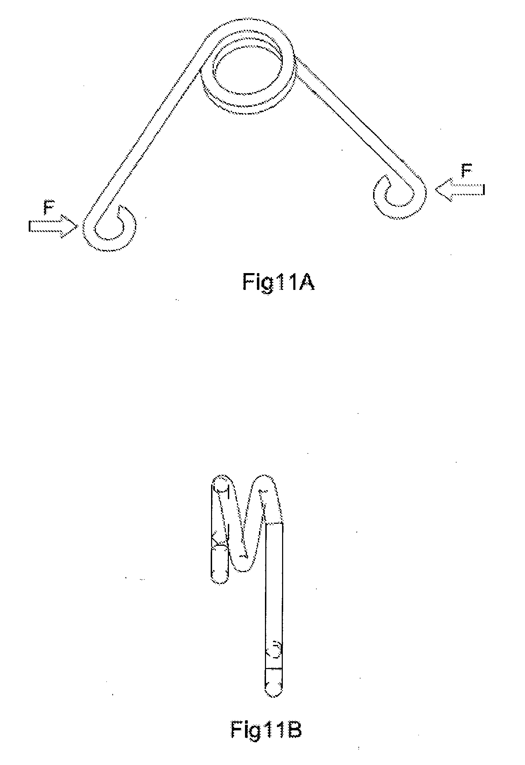

For the sliding cover structure, a spring as an important driven member is used very widely. Figs. 11A and 11B show a conventional torsion spring widely used in the mobile terminals. Because the torsion spring is wound in a spiral way, during elastic deformation, a plurality of arc segments of the torsion spring deform, in which the stress is uniform, the spring strength is high and the life time of the spring is long. However, in the main deformation area, the spring wire is not located in the same plane. In the thickness direction, the thickness of the spring is thicker than the diameter of the spring wire, which is disadvantageous for the thinning of the driving module, and thereby obstructing the thinning of the mobile terminal. Meanwhile, the driving distance of the conventional torsion spring is too short so that the torsion spring is not suitable for the driving module having a long driving distance. Further known springs are disclosed in CN 101 316 493 A, DE 34 14 690 A1, EP 1 933 537 A1 and CN 201 184 384 Y.

### SUMMARY OF THE INVENTION

The present invention is directed to solve at least one problem in the prior art.

Accordingly, in a first aspect of the present invention, there is provided a spring which may reduce the stress concentration therein and realizes thinning thereof.

The spring according to the first aspect of the invention comprises a first end, a second end, and a spring main body connected between the first end and the second end, in which the spring main body comprises a compression spring portion and a torsion spring portion, and is substantially located in a same plane, the compression spring portion comprising a straight segment, an arc segment and a straight segment which are connected in turn; the torsion spring portion having a substantial S-shape, the torsion spring portion comprising a straight segment, an arc segment, a straight segment, an arc segment and an arc segment which are connected in turn.

In a second aspect of the present invention, there is provided a spring assembly comprising at least two springs assembled by securing their corresponding ends together, in which each of the at least two spring is the spring of the first aspect of the present invention.

With the spring of the present invention, the compression and torsion spring portions are combined. A plurality of segments of the spring deforms during deformation of the spring, the stress is allocated among the plurality of segments and the spring life is increased. In addition, the spring thickness may be reduced, which is advantageous for thinning of the spring driving module and mobile terminal.

### BRIEF DESCRIPTION OF THE DRAWINGS

Fig. 1 is a front view of the spring according to embodiment 1 of the present invention.
Fig. 2 is an exploded view of the spring assembly according to embodiment 1 of the present invention.
Fig. 3 is a view of the spring assembly in an assembled state shown in Fig. 1.
Fig. 4 is an exploded view of the spring assembly according to embodiment 2 of the present invention.
Fig. 5 is a view of the spring assembly in an assembled state shown in Fig. 4.
Fig. 6 is a front view of the spring according to embodiment 2 of the present invention.
Fig. 7 is a front view of the spring according to embodiment 3 of the present invention.
Fig. 8 is a schematic view of the spring driving module in use state 1 using the spring according to the present invention.
Fig. 9 is a schematic view of the spring driving module in use state 2 using the spring according to the present invention.
Fig. 10 is a schematic view of the spring driving module in use state 3 using the spring according to the present invention.
Fig. 11A is a perspective view of a conventional spring.
Fig. 11B is a side view of the spring shown in Fig. 1.

### DETAILED DESCRIPTION OF EMBODIMENTS OF THE INVENTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

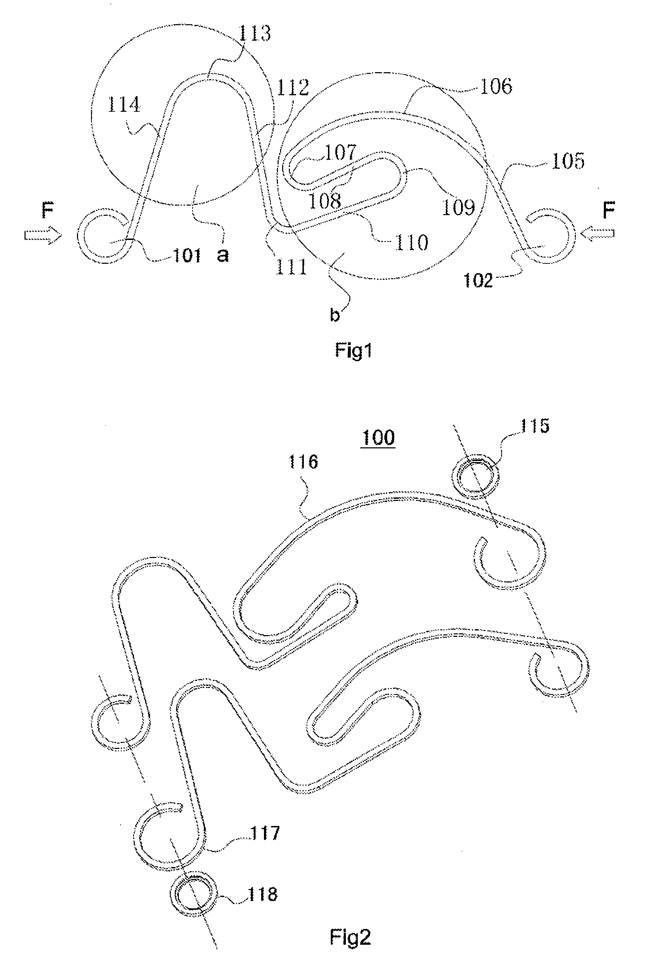

As show in Fig. 1, a spring 1 according to embodiment 1 of the present invention comprises a first end 101, a spring main body and a second end 102. The spring main body comprises a compression spring portion a and a torsion spring portion b, and the spring is located in the same one plane. More particularly, the compression spring portion a comprises a straight segment 114, an arc segment 113, a straight segment 112 which are connected in turn. The torsion spring portion b comprises a straight segment 110, an arc segment 109, a straight segment 108, an arc segment 107, and an arc segment 106 connected in turn. The compression spring portion a is connected with the torsion spring portion b via an arc segment 111. By connecting the compression spring portion a and the torsion spring portion b so as to form the spring main body of the spring, a plurality of deformable arc segments are formed in a small area of the spring. When the spring elastically deforms, a plurality of arc segments 113, 111, 109, 107, 106 deform to allocate stress of the spring, thus reducing the stress in each arc segment and increasing the spring life. In addition, due to all parts of the spring are substantially in the same one plane, the thickness of the spring is equal to the diameter of the spring, so that the thickness of the spring is reduced and the spring is advantageous for thinning the elastic driving module used in the mobile terminals. By using the compression spring portion, the operating range of the spring is increased, which is suitable for the spring driving module requiring a long driving range.

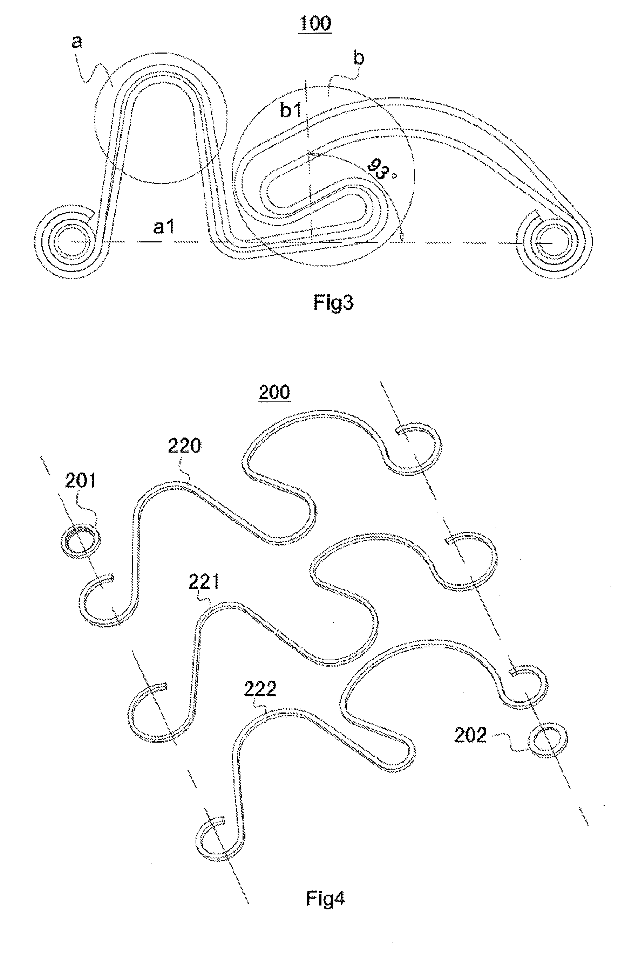

As show in Fig. 2 and Fig. 3, a spring assembly 100 according to embodiment 2 of the present invention is provided. The spring assembly 100 is formed by welding a plurality of springs described in the above embodiment 1 of the present invention. More particularly, the spring assembly 100 is formed by welding the corresponding ends of the springs together. In other words, the first ends of the springs are welded together and the second ends of the springs are welded together. Except for the ends, the other parts of the springs are separated from each other. In order to improve assembly performance, two bearings 118 and 115 are welded in the two ends of the spring assembly 100 respectively.

As show in Fig. 3, in the embodiment 1 of the present invention, the torsion spring portion b has a substantial S-shape. the main axis bl of the torsion spring portion b is at an angle to a line connecting the first and second ends 101, 102 of the spring, and the angle is about 90 degree, such as 93 degree in the Fig.3, so that the arc segments deforms more sufficiently during elastically deforming of the spring, thus allocating stress to each arc segment so as to increase the spring life.

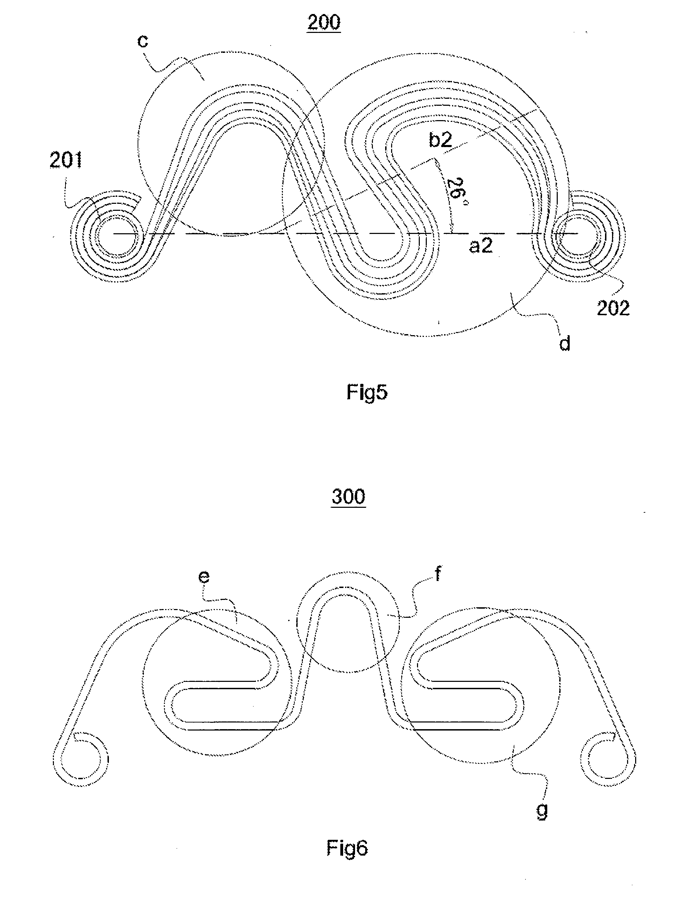

Fig. 4 and Fig. 5 show a spring assembly 200 according to embodiment 2 of the present invention. The spring assembly 200 is formed by welding two ends of three springs 220, 221 and 222 together. Each of the springs 220, 221 and 222 comprises a compression spring c and a torsion spring d. The spring assembly 200 is different from the spring assembly 100 in that the axis d2 of S-shaped torsion spring portion d of the spring is at an angle in a range 0-90 degree to the line c2 connecting the two ends of the spring. The spring forming the spring assembly 200 of embodiment 2 is easier to manufacture, with comparison to that the stress is allocated more uniformly in the spring forming the spring assembly 100 of embodiment 1. The aforementioned embodiments are only exemplary, and the present invention is not limited to this. For example, the angle from by the axis of S-shape torsion spring portion and the line connecting the two ends of the spring is not limited to the range of 0-90 degree, as long as the torsion spring portion and the compression spring portion are in the same one plane.

Fig. 6 shows a spring 300 according to embodiment 3 of the present invention. The spring 300 comprises a first end, a first torsion spring portion e, a compression spring portion f, a second torsion spring portion g and a second end which are connected in turn.

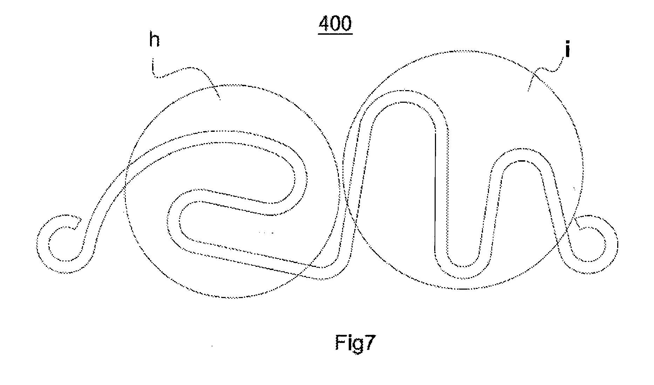

Fig. 7 shows a spring 400 according to embodiment 4 of the present invention. The spring 400 comprises a first end, a torsion spring portion h, several compression spring portions i, and a second end which are connected in turn.

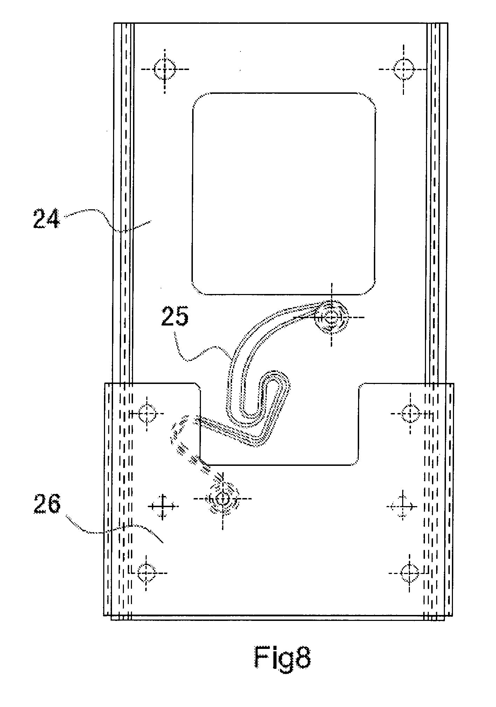

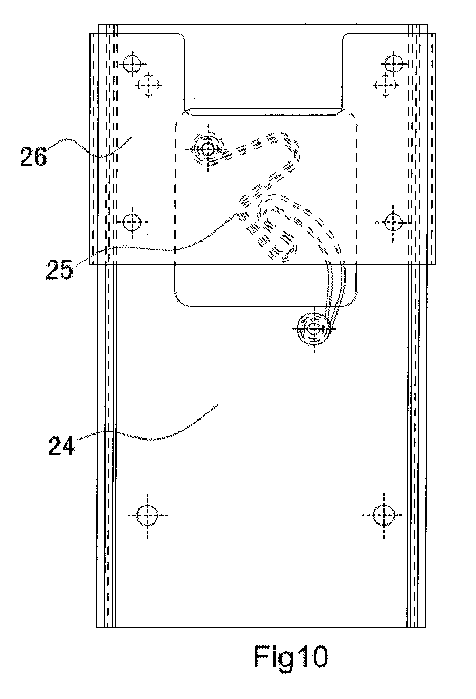

The use states of the spring assembly will be described with reference to Figs. 8 and 10 hereinafter. A rivet is fitted in each of two bearings disposed in each end of the spring assembly 25. The two ends of the spring assembly 25 is secured to a first sliding plate 26 and a second sliding plate 24 of a sliding mechanism respectively. The rivet is pivotable relative to the bearing, but the rivet can not pivot or slide relative to the first and second sliding plates 24, 26, at this time, the spring assembly 25 is slightly compressed to ensure the first and second sliding plates 26, 24 in a relatively static state at the initial position, as shown in Fig.8. An external force is needed to apply to the first sliding plate 26 in order to move the first sliding plate 26 relative to the second sliding plate 24.

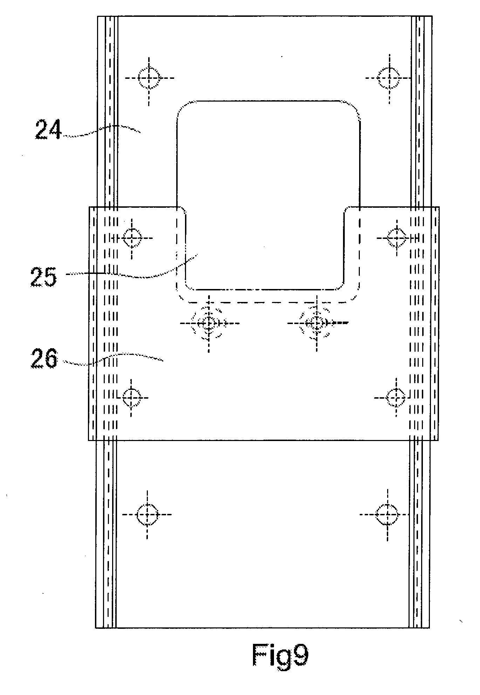

Under applying the external force to the first sliding plate 26, the first sliding plate 26 is slid relative to the second sliding plate 26 from the position shown in Fig. 8 to the position shown in Fig. 9. During this, the spring assembly 25 stores energy, and the deformation of the spring become bigger gradually.

During the first sliding plate 26 sliding from the position shown in Fig. 9 to the position shown in Fig. 10, it is not required to apply an external force to the first sliding plate 26, because the spring assembly 25 may constantly release energy so as to move the first sliding plate 26, so that the first sliding plate26 may automatically slide relative to the second sliding plate 24. The deformation of the spring will become less gradually because of the spring assembly 25 constantly releases energy.

With the embodiments of the present invention, the compression spring portion and the torsion spring portion are combined in the spring. Compared with conventional spring only comprising a compression spring portion, the deformed arc segments are increased, which is advantageous for allocating stress and thereby increasing the spring life. In addition, compared with conventional spring only comprising a torsion spring portion, the thickness of the spring is reduced, which is advantageous for thinning of spring driving module and the mobile terminals using the spring driving module.

## Claims

1. A spring, comprising:
a first end (101),
a second end (102), and
a spring main body connected between the first end (101) and the second end (102),
wherein the spring main body comprises a compression spring portion (a) and a torsion spring portion (b), and is substantially located in a same plane
the compression spring portion (a) comprising a straight segment (114), an arc segment (113) and a straight segment (112) which are connected in turn;
the torsion spring portion (b) having a substantial S-shape, the torsion spring portion comprising a straight segment (110), an arc segment (109), a straight segment (108), an arc segment (107) and an arc segment (106) which are connected in turn.

2. The spring of claim 1, wherein a main axis (b1, b2) of the torsion spring portion (b) is at an angle to a line (a1, a2) connecting the first end (101) and the second end (102).

3. The spring of claim 2, wherein the angle is substantial 90 degree.

4. The spring of claim 1, wherein the torsion spring portion comprises a first torsion spring portion (e) and a second torsion spring portion (g), in which the compression spring portion (f) is connected between the first torsion spring portion (e) and the second torsion spring portion (g).

5. The spring of claim 1, wherein the spring main body comprises one torsion spring portion (h) and a plurality of compression spring portions (i) which are connected in turn.

6. The spring of claim 1, wherein a bearing (118, 115, 201, 202) is disposed in each of the first end (101) and the second end (102).

7. The spring of any one of claims 1-6, wherein a spring wire of the spring has a circular, rectangular or square cross-section.

8. A spring assembly (100, 200), comprising at least two springs assembled by securing their corresponding ends together, in which each of the at least two springs is the spring of any one of claims 1-8.

9. The spring assembly (100, 200) of claim 8, wherein the at least two springs are assembled such that they are located in a same plane, in which a thickness of the spring assembly is equal to a diameter of a spring wire of each spring.

## Patentansprüche

1. Feder, aufweisend:
ein erstes Ende (101),
ein zweites Ende (102), und
einen Federhauptkörper, der zwischen dem ersten Ende (101) und dem zweiten Ende (102) angeschlossen ist,
wobei der Federhauptkörper einen Druckfederbereich (a) und einen Drehfederbereich (b) aufweist und im Wesentlichen in einer selben Ebene angeordnet ist,
wobei der Druckfederbereich (a) ein gerades Segment (114), ein Bogensegment (113) und ein gerades Segment (112), die der Reihe nach miteinander verbunden sind, aufweist;
wobei der Drehfederbereich (b) im Wesentlichen S-förmig ist, wobei der Drehfederbereich ein gerades Segment (110), ein Bogensegment (109), ein gerades Segment (108), ein Bogensegment (107) und ein Bogensegment (106), die der Reihe nach miteinander verbunden sind, aufweist.

2. Feder nach Anspruch 1, wobei eine Hauptachse (b1, b2) des Drehfederbereichs (b) in einem Winkel zu einer Linie (a1, a2), die das erste Ende (101) und das zweite Ende (102) miteinander verbindet, verläuft.

3. Feder nach Anspruch 2, wobei der Winkel im Wesentlichen 90 Grad beträgt.

4. Feder nach Anspruch 1, wobei der Drehfederbereich einen ersten Drehfederbereich (e) und einen zweiten Drehfederbereich (g) aufweist, wobei der Druckfederbereich (f) zwischen dem ersten Drehfederbereich (e) und dem zweiten Drehfederbereich (g) angeschlossen ist.

5. Feder nach Anspruch 1, wobei der Federhauptkörper einen Drehfederbereich (h) und eine Vielzahl von Druckfederbereichen (i), die der Reihe nach miteinander verbunden sind, aufweist.

6. Feder nach Anspruch 1, wobei ein Lager (118, 115, 201, 202) in jedem des ersten Endes (101) und des zweiten Endes (102) angeordnet ist.

7. Feder nach einem der Ansprüche 1-6, wobei ein Federdraht der Feder einen kreisförmigen, rechteckigen oder quadratischen Querschnitt aufweist.

8. Federnanordnung (100, 200), aufweisend zumindest zwei Federn, die durch Aneinander-Befestigen ihrer korrespondierenden Enden zusammengesetzt sind, wobei jede der zumindest zwei Federn die Feder nach einem der Ansprüche 1-8 ist.

9. Federnanordnung (100, 200) nach Anspruch 8, wobei die zumindest zwei Federn derart zusammengesetzt sind, dass sie in einer selben Ebene angeordnet sind, wobei eine Dicke der Federnanordnung gleich einem Durchmesser eines Federdrahts jeder Feder ist.

## Revendications

1. Un ressort, comprenant:
une première extrémité (101),
une seconde extrémité (102), et
un corps principal de ressort relié entre la première extrémité (101) et la seconde extrémité (102),
le corps principal de ressort comprenant une partie (a) de ressort de compression et une partie (b) de ressort de torsion, et étant disposé sensiblement dans un même plan,
la partie (a) de ressort de compression comprenant un segment (114) droit, un segment (113) d'arc, et un segment (112) droit qui sont reliés tour à tour ;
la partie (b) de ressort de torsion présentant une forme sensiblement en S, la partie de ressort de torsion comprenant un segment (110) droit, un segment (109) d'arc, un segment (108) droit, un segment (107) d'arc, et un segment (106) d'arc qui sont reliés tour à tour.

2. Ressort selon la revendication 1, dans lequel un axe (b1, b2) principal de la partie (b) de ressort de torsion se trouve à un angle par rapport à une ligne (a1, a2) reliant la première extrémité (101) et la seconde extrémité (102).

3. Ressort selon la revendication 2, dans lequel l'angle est sensiblement égal à 90 dégrées.

4. Ressort selon la revendication 1, dans lequel la partie de ressort de torsion comprend une première partie (e) de ressort de torsion et une seconde partie (g) de ressort de torsion, la partie (f) de ressort de compression étant reliée entre la première partie (e) de ressort de torsion et la seconde partie (g) de ressort de torsion.

5. Ressort selon la revendication 1, dans lequel le corps principal de ressort comprend une partie (h) de ressort de torsion et une pluralité de parties (i) de ressort de compression qui sont reliées tour à tour.

6. Ressort selon la revendication 1, dans lequel un palier (118, 115, 201, 202) est disposé dans chacune de la première extrémité (101) et de la seconde extrémité (102).

7. Ressort selon l'une des revendications 1-6, dans lequel un fil ressort du ressort présente une section circulaire, rectangulaire ou carrée.

8. Ensemble (100, 200) ressort, comprenant au moins deux ressorts assemblés en fixant, les unes aux autres, leurs extrémités correspondantes, chacun des au moins deux ressorts étant le ressort selon l'une des revendications 1-8.

9. Ensemble (100, 200) ressort selon la revendication 8, dans lequel les au moins deux ressorts sont assemblés de manière à être disposés dans un même plan, une épaisseur de l'ensemble ressort étant égale à un diamètre d'un fil ressort de chaque ressort.
